# EUROPEAN PATENT SPECIFICATION

(11) **EP 2 732 999 B1**
(45) Date of publication and mention of the grant of the patent: **06.02.2019**
(21) Application number: 13193713.8
(22) Date of filing: 20.11.2013
(51) Int. Cl.: B60J 5/12, B60P 1/26, B60P 1/02

(54) **Improvements to a goods storage area**
Verbesserungen an einer Lagerfläche für Güter
Améliorations apportées à une zone de stockage de marchandises

(30) Priority: 20.11.2012 GB 201220864
(43) Date of publication of application: 21.05.2014
(73) Proprietor: Adams, William Mark, Retford, Nottinghamshire DN22 8PT (GB)
(72) Inventor: Adams, William Mark, Retford, Nottinghamshire DN22 8PT (GB)
(74) Representative: Stephenson, Philip

(56) References cited:
- EP-A2- 0 196 833
- AU-B2- 441 612
- FR-A1- 2 814 120
- JP-U- H0 338 216
- US-A- 908 199

## Description

The invention to which this application relates is to improvements to a goods storage area and, in particular, although not necessarily exclusively, to a goods storage area in the form of a trailer which is provided to be moved by a road vehicle, along a road network.

Such a goods storage area is for example disclosed in the prior art document JP H03 38216 U.

The use of goods storage trailers is well known and the same can be provided in a number of different forms and sizes to suit the goods which are being carried therein, the distance for which the goods are to be carried and/or the access requirements at the locations for delivery and/or collection of goods.

In many types of goods storage trailers, there is often a conflict between the required dimensions of the trailer in terms of the available goods storage area, and the goods which are to be located in the same, with there quite typically being pressure to ensure that the use of the available goods storage area is maximised in terms of filling the same with goods. Many goods are carried, particularly to retail outlets, in "cages" which are provided with wire mesh side walls, a base and wheels or rollers, to allow the same to be moved to and from the goods storage area and which are commonly known as roll cages. While the available space within the goods storage area, is sufficient to allow the cages to be positioned therein, there can often be a problem in moving the roll cages through the access openings to the goods storage area as the goods storage area is typically linked to the location at which the goods are to be stored subsequently, or obtained from, via a ramp. The location of the ramp typically causes the cages to be introduced into the goods storage area at an angle which means that the effective height of the cages at that time is greater than when the same are on a horizontal surface. This, in turn, can mean that the available space in terms of height at the access opening into the vehicle storage area is insufficient and can cause the roll cages to be difficult to fit in or, in the worst scenario, can in fact mean that the cages cannot be moved into or from the goods storage area as the same will jam against the roof of the access opening. This problem is particularly exacerbated by the provision of goods storage areas which have two floors, a base floor and a second floor which is vertically spaced from the base and both of which are provided to receive goods, such as roll cages thereon.

While the provision of the double floor arrangement will allow, at least in theory, increased use of the available storage space it does make the space which is available for manoeuvre on the respective floors at a premium. This is particularly experienced at the access opening or the interface between the goods storage area and an external area from which the goods are moved.

A further problem which is experienced is with regard to the opening and closure of the access opening. This is conventionally achieved either by the use of hinged doors which are required to be typically moved about their respective hinges located at the side walls of the trailer goods storage area and at the edge of the opening. The doors are moved between the open and closed positions. Alternatively a shutter arrangement is provided which comprises a series of elongate members which are joined together and which can be moved between a fully open position and a closed position closing the entre height of the opening.

With regard to the use of hinged doors it is found that where vehicle trailers are used to deliver and/or collect goods in relatively confined access areas, such as inner city areas or relatively small retail outlets, there can often not be sufficient space available to allow the doors to be swung outwardly outwith the side walls of the goods storage area in order to fully open the access opening. EP0196833 illustrates such an arrangement in which there is provided a container with first and second spaced floors and a first pair of hinged doors and a second pair of hinged doors, with the pairs of doors being swung open or closed about their respective hinges. This can cause practical difficulties in delivering and/or collecting goods. The use of shutter assemblies does avoid this problem but the need to provide drive means to move the shutter system between the open and closed positions and furthermore the need to provide storage space for the shutter members when the shutter is in the open position means that the already limited space which is available within the goods storage area is further reduced by the requirement for the provision of the storage space for the shitter arrangement.

A yet further problem which is experienced, particularly with goods storage areas which include first and second floors, is that while the provision of the second floor raised above the first floor does provide advantages in terms of use of the available space, it can be found that the fixed second floor is not sufficiently flexible in terms of its position within the goods storage area.

An aim of the present invention is therefore to provide improvements which allow the use of the access opening, typically at the rear of the goods storage area, to be improved in terms of use, and accessibility of the same. A further aim is therefore to provide a system where by if a second floor is provided in the goods storage area, to allow the goods storage area to be more flexible.

In a first aspect of the invention there is provided a goods storage area, said storage area including a base, a roof, side walls and opposing end walls, one of said end walls including an access opening therein and a further floor is provided which is vertically spaced from, and located between, the base and the roof and wherein the access opening is provided with closure means which comprise first and second panels, characterised in that said panels are independently moveable so as to achieve a first configuration in which the access opening is closed, a second configuration in which the panels at least partially overlap to allow access to the storage area defined between the base and the further floor, and a third configuration in which the panels at least partially overlap to allow access to the storage area defined between the further floor and the roof.

In one embodiment the panels are manually movable.

In one embodiment the movement of the panels is achieved by operation of a drive means.

Typically the panels are moveable along respective guide means provided at opposing edges of the same. Typically the panels are mounted on pulleys in order to allow the same to be moved.

Typically the pulley members are attached to one or more weights. Typically the weights are selected so as to act to balance against the weight of the panel and hence maintain the panels in the position to which the same have been moved until a further movement force is exerted thereon.

In one embodiment the respective weights are retained so as to move in a predetermined path move when a movement force is exerted on a panel to move the same.

In one embodiment the weights are enclosed with respective passages along which the same move and/or the weights are connected to a track along which the same move.

In one embodiment locking means are provided in order to retain at least one of the panels in position in each configuration. Typically the locking means which are provided are independently operable with respect to each panel.

In one embodiment the locking means comprise at least one, but typically two shoot bolts, which, when moved to a locking position engage with an aperture provided in at the end wall adjacent the access opening.

In one embodiment the locking means are provided with means to allow the same to be accessed by a person on the ground and/or on the base of the goods storage area to as to allow the means to be actuable by the person in order to operate the locking means regardless of the height of the panel with which the locking means is provided at that time.

Typically the said panels are offset in respect of a vertical plane so as to allow the same to be moved to overlapping positions.

In one embodiment the said storage area includes a portion which is mounted on the further floor and/or a portion which is mounted on the roof and each portion which is provided is moveable between a first position in which the same is substantially in line with the remainder of the roof, or further floor, respectively and a second position in which at least part of the portion is raised.

In one embodiment, the panels are provided with respect to the access opening such that the panels can be moved to a location such that the top edges of the panels are higher than the inner face of the roof. In this arrangement so the panels can both be moved to a raised position such that the lower edge of the panels is in line with or above the said further floor portion when it is in the second raised position.

The invention therefore provides a closure assembly for an opening into a goods storage area, said apparatus comprising first and second panels, wherein said panels are moveable between a first configuration in which the access opening is closed by said panels, a second configuration in which the panels at least partially overlap to partially open the access opening and a third configuration, different to the second configuration, in which the panels at least partially overlap to partially open the access opening.

In one embodiment, in the second configuration the lower portion of the access opening is open and in the third configuration a higher portion of the access opening is open.

In one embodiment the panels are of the same height. The panels may be formed of a unitary member or from a number of members joined together. However in each case the panels are not required to be folded, rolled or otherwise altered or stored in any of the required configurations of their use.

In one embodiment on one or both of the roof and further floor there is provided a portion which is movable between a first position in which the same is substantially in line with the remainder of the roof or further floor respectively and a second, raised position.

In one embodiment the said portion is pivotally movable between the first and second portions.

Typically the pivot axis extends across the width of the goods storage area.

In one embodiment the portion is located at or adjacent to the access opening. In one embodiment the portion is formed across the width of the roof or further floor and has a free end at the access opening and extends inwardly to the pivot axis.

In one embodiment the said free end is the highest point of the portion when the same is in the second position.

In one embodiment the said portion is moved to the second position when loading and/or unloading goods to and from the respective floors so as to allow increased space to be available at the access opening and thereby ease or allow the movement of goods therethrough.

In one embodiment the said portions are manually movable but provided with struts or stays to allow the same to be maintained in the second position until released.

Typically, if provided, only one of the said portions will be raised at any given time.

In a further embodiment of the invention the said further floor is provided with at least one section which is movable along a predefined path so as to vary the spacing between that section and the base of the goods storage area. Typically said section is provided in addition to the portion provided at the access opening, but this need not be the case.

Typically said section is movable along a vertical axis and allows the space which is available between the same and the base to be adjusted to allow either or both of greater room for manoeuvring of the goods and/or the space required for the storage of goods therein to be altered to take into account that particular load to be carried.

In one embodiment the further floor is formed of one or a plurality of said sections.

In one embodiment the access opening is provided with closure means which comprise first and second panels, said panels movable between a first configuration in which the access opening is closed, a second configuration in which the panels at least partially overlap to allow access to the storage area between the base and the further floor and a third configuration in which the panels at least partially overlap to allow access to the storage area between the further floor and the roof.

In one embodiment the further floor is provided with at least one section which is movable along a predefined path so as to vary the spacing between that section and the first floor of the goods storage area.

Typically said section is movable along a vertical axis and allows the space which is available between the same and the base to be adjusted to allow either or both of greater room for manoeuvring of the goods and/or the space required for the storage of goods therein to be altered to take into account that particular load to be carried.

Specific embodiments of the invention are now described with reference to the accompanying drawings wherein;
Figures 1 and 2 illustrate a goods storage area in elevation in accordance with the invention;
Figure 3 illustrates the portion of the goods storage area adjacent the access opening;
Figures 4a-c illustrates an end elevation of a goods storage area closure assembly in accordance with one embodiment of the invention in a schematic manner;
Figures 5a-d illustrate front and rear perspective views and an elevation and side views of a closure assembly of the type illustrated in Figures 4a-c;
Figure 6 illustrates a sectional view of the closure assembly of Figures 5a-d;
Figures 7a-b and 8a-b illustrate details of the guide means for movement of the panels of the closure assembly of Figures 5a-6;
Figures 9a-b illustrate locking means for use with the closure assembly of Figures 5a-8b; and
Figures 10a-b illustrate the closure assembly with the pulleys in position.

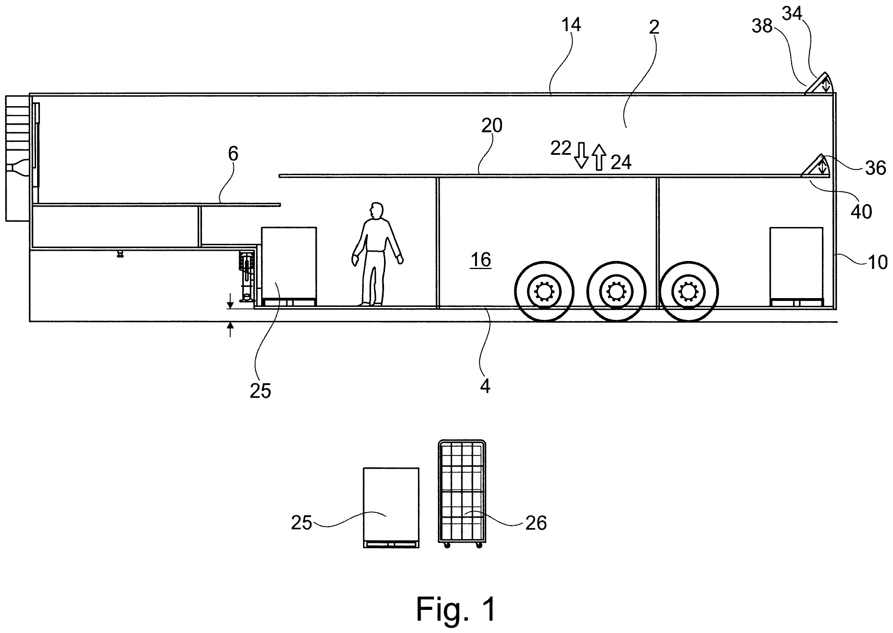

Referring firstly to Figures 1-3 there is illustrated a goods storage area 2. The goods storage area in this embodiment is a trailer for transport by a vehicle and is defined end walls 8,10, the rear of which , 10 , is provided with an access opening 12. The goods storage area includes a roof 14 and side walls 16,18. The goods storage area also includes a base or first floor 4 and a second floor 6 vertically spaced from the first floor. In accordance with the invention the second floor includes a portion 20 which is movable with respect to the remainder of that floor as shown by arrows 22,24 as shown in Figure 1. This allows the same to be raised to a position to allow greater manoeuvrability in the area defined between the underside of the second floor and the first floor for the movement of goods such as roll cages 26 or pallets 25 into position on the floor 4. Once the movement has been achieved the floor can be moved down as indicated by arrow 22 to then allow roll cages 26 or pallets 25 to be moved into position along, and be supported by, the second floor 6 which is then provided as a uniform surface.

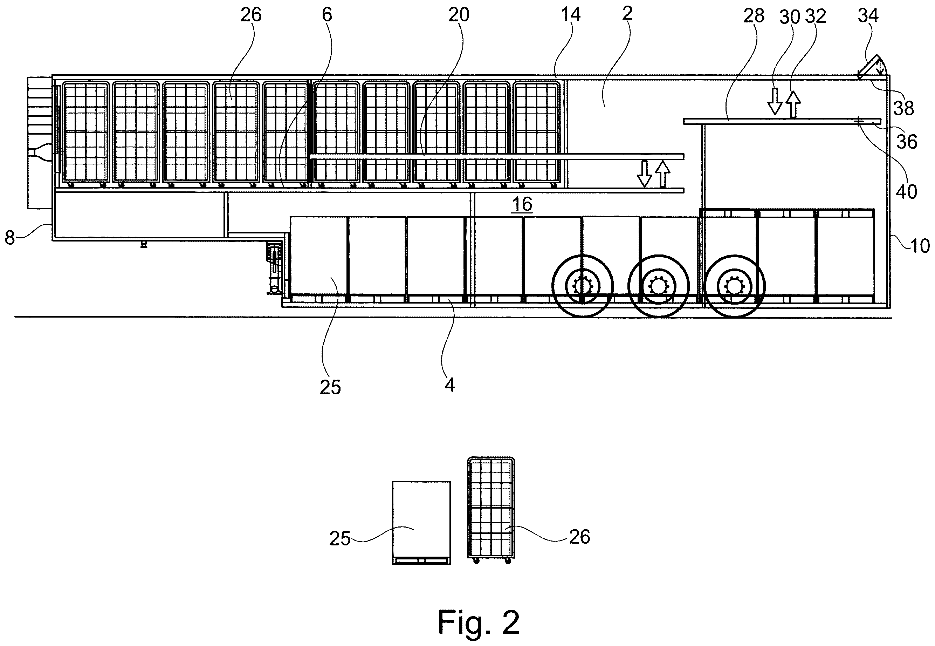

Figure 2 illustrates the manner in which the goods storage area may include a further floor portion 28 which can also be moved in the vertical direction as indicated by arrows 30,32 to allow improved flexibility of the storage area.

In addition, or separately from the provision of the movable floor portions 20,28, the roof 14 and floor 6 are provided with respective portions 34,36. These portions are selectively movable about respective pivot axis 38, 40 which extend across the width of the storage area. The movement is between a first position in which the potions lie flush and in line with the remainder of the roof 14 and floor 6 respectively and a second position in which the free ends of the portions are raised as shown.

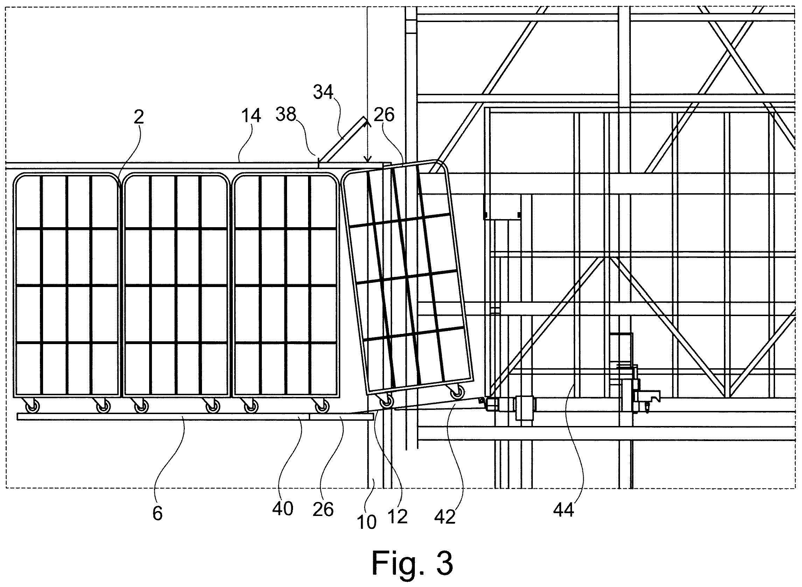

When the portions are raised so the size of the opening into the respective storage area defined between the floor 4 and underside of floor 6 or between the floor 6 and the roof 14 is increased at the end of the storage area access opening by a factor of "x" as illustrated. This is sufficient to allow improved non obstructed movement of the rollcages 26 into the appropriate storage as illustrated in Figure 3 where it is shown how rollcage 26 can be moved along bridging ramp 42 from a platform 44 and into the goods storage area 2 and onto floor 6. The portion 34 is raised to allow the increase in access space and the portion is shown in broken lines in the first position to show how, if the same was lowered the roll cage would hit the same if the same was lowered due to the angle of approach down ramp 42.

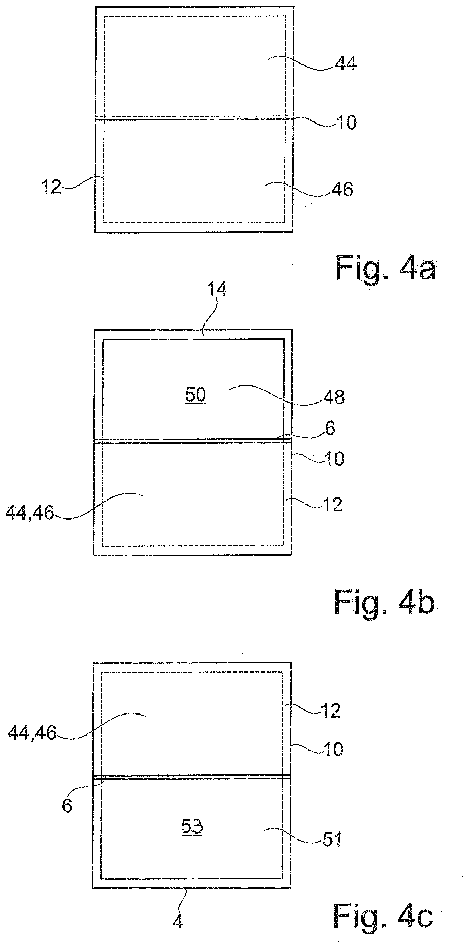

Turning now to Figure 4a-c there is illustrated the end wall 10 of the goods storage area and an access opening 12 with a closure assembly therefore in three configurations. Figure 4a illustrates the closure assembly in a closed position to close the access opening in which the same is closed by the position of first and second panels 44,46 positioned such that, in combination, the access opening is wholly closed. In Figure 4b the closure assembly is shown in a configuration in which the panel 44 has been moved to overlap panel 46 and thereby allow an open area 48 to be created which allows access to the higher storage area 50 defined between the floor 6 and roof 14. In Figure 4c the third configuration is shown in which the panel 46 has been moved to overlap the panel 44 to allow an opening 51 to be created which allows access to the lower storage area 53 between the base floor 4 and the underside of floor 6. Thus, it will be appreciated that there is provided an effective closure assembly for the access opening 12.As the panels 44,46 are offset with regard to a vertical plane, so the panels can be housed largely within the area of the end 10 of the storage area. In one embodiment when the panels are in the configuration shown in Figure 4c, the panels can be moved such that the top edge of the panels are moved above the top of the access opening. This means that the lower edge of the panels 44,46 are higher than the level of the floor 6 and can be held at a position which is equal to the height of the raised portion 36 as shown in Figure 1 in which the portion has been raised the distance X. This means that the advantage of the provision of the portion 36 is obtained due to the ability to raise the panels 44,46 higher.

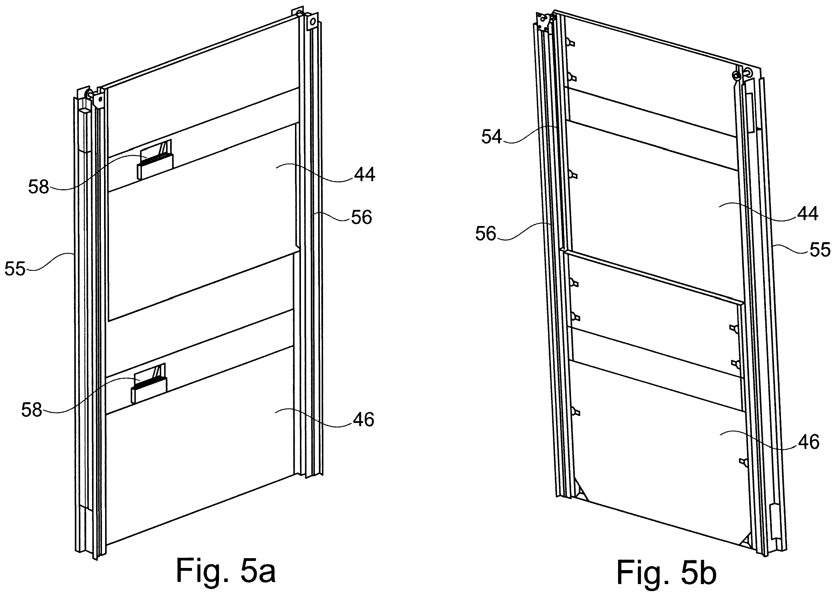

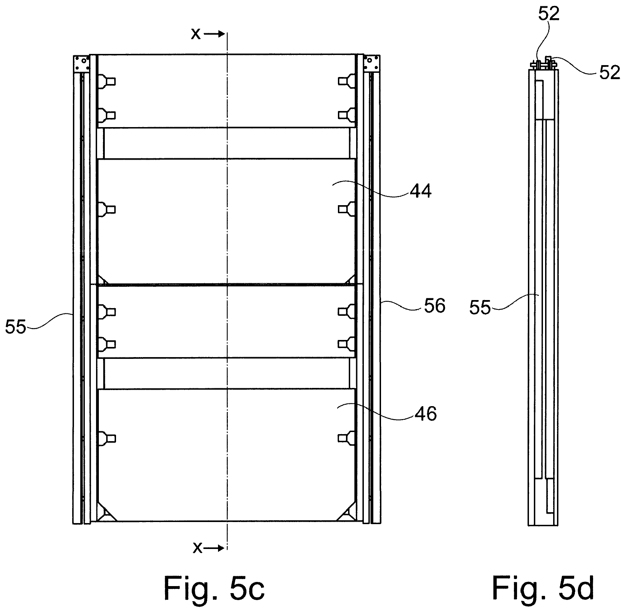

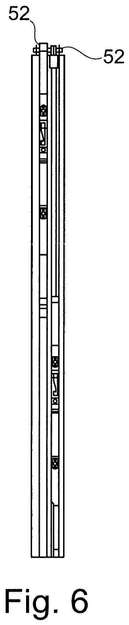

Figures 5a-d illustrate views of the closure assembly and shows the panels 44,46 in the fully closed position as illustrated in Figure 4a The panels are moved via guide means, and driven, typically by one or more pulleys, 52 and chains or ropes 54 which are located at opposing edges 55,56 of the closure assembly panels. Handles 58 can be provided on the panels to allow the same to be grasped for movement between the configurations. The movement can be powered by drive means which may, in one embodiment be located at the underside of the goods storage area, but, more typically will be manually movable. In either case the closure assembly ensures that all of the goods storage area is still available for the storage of goods therein. Figure 6 illustrates a cross section along the line XX.

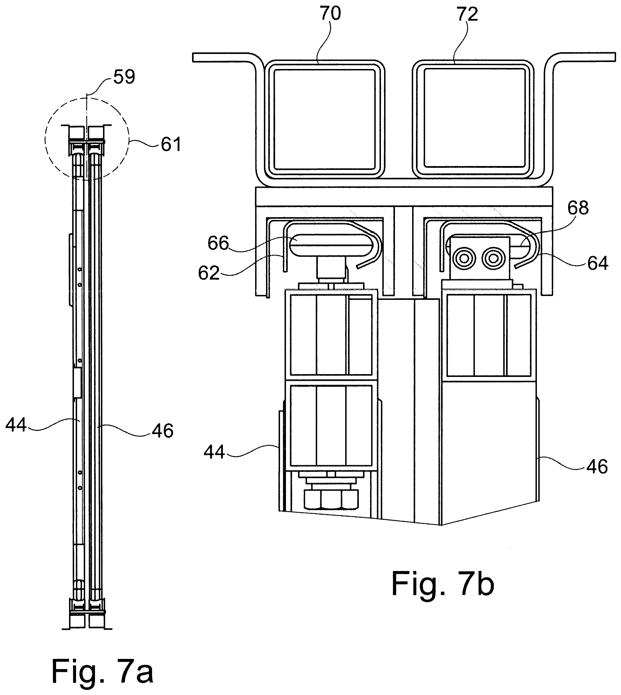

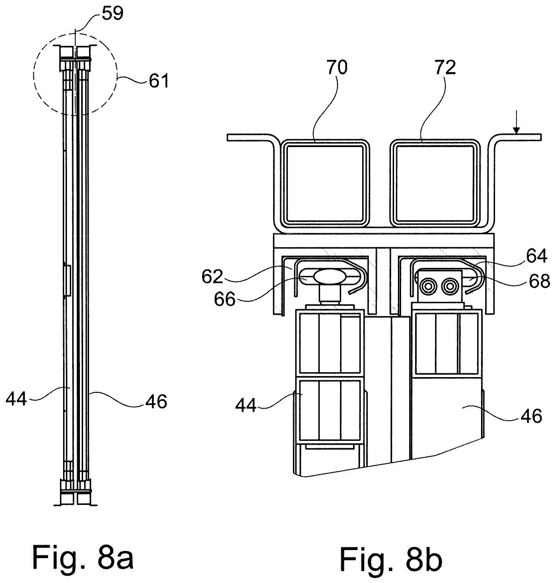

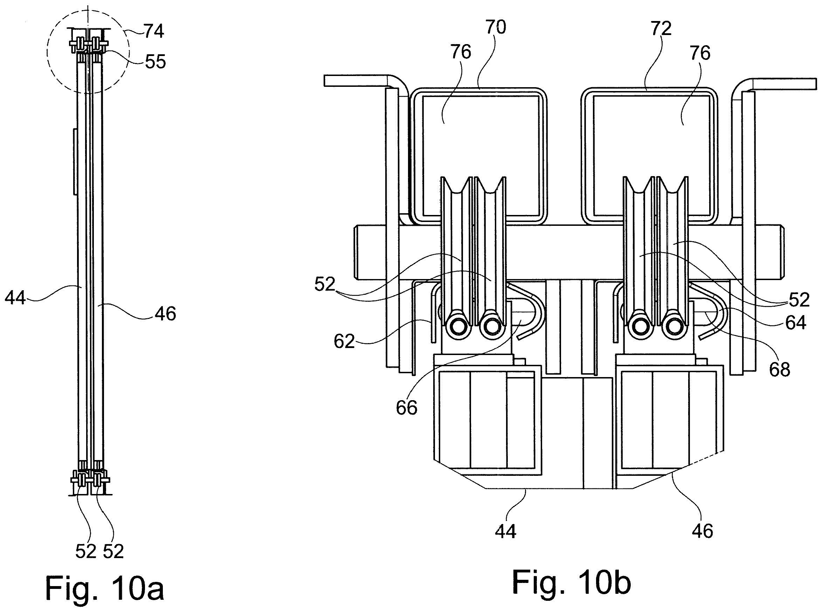

Referring now to Figures 7a-b and 8a-b there is illustrated in Figures 7a and 8a a plan view of the closure assembly and which illustrates the manner in which the panels 44,46 are offset to each other along the plane 59. The figures 7b and 8b illustrate a detailed view of one side of the panels and guide and movement arrangement therefore as illustrated by the circle 61. The panels 44, 46 are provided to be movable along respective guide means 62, 64 at each edge. The panels are provided with rollers 66,68 which engage in the respective guide means and roll along the same so as to provide guide movement of the panels between the different configurations. Also provided are first and second passages 70, 72 for the respective panels. Each of the passages receives at least one weight (not shown) which is connected to a pulley rope (not shown). These will be described in greater details subsequently with reference to Figures 10a and b. Figure 10a shows a similar view to that shown in Figures 7a and 8a and Figure 10b illustrates the detail of one edge 55 of the closure assembly as indicated by circle 74. In this case the same features are illustrated using the same reference numbers. In addition pulleys 52 are illustrated for each of the panels. The pulleys receive respective ropes or chains therearound. One end of the rope or chain is attached to the panel and the rope or chain is attached to the weights 76. This means that the movement of the panel along the guide means can be achieved and the weights will move along the respective passage 70,72 so as to balance the movement and retain the panels at the desired height. Typically the pulleys are provided at each edge of the panels along with the weight arrangements. The arrangement which can be used to allow movement of the respective panels is in one embodiment similar to the weight and pulley arrangement which is used in relation to a sash window movement mechanism.

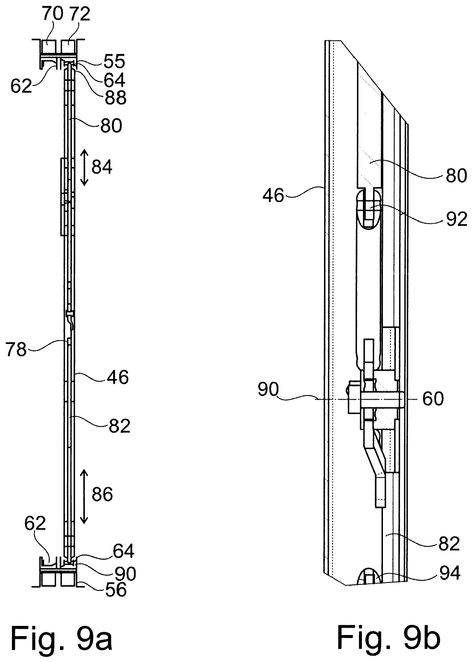

It will therefore be appreciated that each of the panels 44,46 is independently movable. In order to provide additional safety over and above the effect of the weights in retaining the panels in the selected position, locking means can be provided for each of the panels. Figures 9a and b illustrate one of the panels 46 is shown with locking means 78 is shown. The locking means includes first and second opposing shoot bolts 80,82 which are movable as indicated by respective arrows 84,86. When in a locking position the shoot bolt free end 88 engages in an aperture in the guide means 64 at the edge 55 and the free end 90 of the shoot bolt 82 engages in an aperture in the guide means 64 at edge 56. When engaged the panel is prevented from moving up and down along the guide means. When disengaged the panels are free to move.

In order to engage and disengages the locking means a handle assembly 60 is provided at the centre of the panel and as shown in more detail in Figure 9b. The handle assembly is rotatable about axis 90 and, via joints 92, 94 can cause the shoot bolts 80, 82 to be moved out or moved in to engage and disengage the same as appropriate. Typically the handle assembly 60 is provided with actuation means such as a strap (not shown) which can extend downwardly from the panel to a sufficient extent so as to allow the same to be grasped and used by a person to actuate the locking means when the person is positioned on the ground.

It should be appreciated that the features described herein can be used to advantage individually or in combination.

## Claims

1. A goods storage area (2), said storage area including a base (4), a roof (14), side walls (16,18) and opposing end walls (8,10), one of said end walls including an access opening (12) therein and a further floor (6) is provided which is vertically spaced from, and located between, the base (4) and the roof (14), and wherein the access opening is provided with closure means which comprise first and second panels (44,46), **characterised in that** said panels are independently moveable so as to achieve a first configuration in which the access opening is closed, a second configuration in which the panels (44,46) at least partially overlap to allow access to the storage area (2) defined between the base (4) and the further floor (6), and a third configuration in which the panels (44,46) at least partially overlap to allow access to the storage area (2) defined between the further floor (6) and the roof (14).

2. A goods storage area (2) according to any of the preceding claims **characterised in that** the panels (44,46) are manually movable.

3. A goods storage area (2) according to any of the claims 1-2 **characterised in that** the movement of the panels (44,46) is achieved by operation of a drive means.

4. A goods storage area (2) according to any of the preceding claims **characterised in that** the panels (44,46) are moveable along respective guide means (62,64) provided at opposing edges of the same.

5. A goods storage area (2) according to any of the preceding claims **characterised in that** the panels (44,46) are mounted on pulleys (52) in order to allow the same to be moved.

6. A goods storage area (2) according to any of the preceding claims **characterised in that** locking means (78) are provided in order to retain at least one of the panels (44,46) in position in each configuration.

7. A goods storage area (2) according to any of the preceding claims **characterised in that** the said panels (44,46) are offset in respect of a vertical plane so as to allow the same to be moved to overlapping positions.

8. A goods storage area (2) according to any of the preceding claims **characterised in that** said storage area includes a portion (28, 36) which is mounted on the further floor (6) and/or a portion (34) which is mounted on the roof (14) and each portion which is provided is moveable between a first position in which the same is substantially in line with the remainder of the roof, or further floor, respectively and a second position in which at least part of the portion is raised.

9. A goods storage area (2) according to claim 8 **characterised in that** the said portion (36) is pivotally moveable between the first and second positions about a pivot axis which extends across the width of the goods storage area.

10. A goods storage area according to claim 9 **characterised in that** the portion (36) is located at, or adjacent to, the access opening (12) with a free end located at the access opening and the portion extends inwardly of the storage area to the pivot axis (40).

11. A goods storage area (2) according to claim 10 **characterised in that** the free end is the highest point of the portion (36) when the same is in the second position.

12. A goods storage area (2) according to claim 8 **characterised in that** the said portions (28, 36,34) are manually moveable and provided with locking means to allow the same to be maintained in the second position until released.

13. A goods storage area (2) according to any of the preceding claims **characterised in that** the said further floor (6) is provided with at least one section (20, 28) which is moveable along a pre-designated path so as to vary the spacing between that section and the base (4) of the goods storage area.

14. A goods storage area (2) according to claim 13 when also dependent on any of claims 8-12 **characterised in that** the section (20,28) is in addition to the portion (36) provided at the access opening.

## Patentansprüche

1. Warenlagerbereich (2), wobei der genannte Lagerbereich eine Basis (4), eine Decke (14), Seitenwände (16, 18) und einander entgegengesetzte Endwände (8, 10) aufweist, wobei eine der genannten Endwände eine Zugangsöffnung (12) in ihr aufweist und ein weiterer Boden (6) bereitgestellt ist, der von bzw. zwischen der Basis (4) und der Decke (14) vertikal beabstandet ist und liegt, und wobei die Zugangsöffnung mit Verschlussmitteln versehen ist, die eine erste und eine zweite Platte (44, 46) umfassen, **dadurch gekennzeichnet, dass** die genannten Platten unabhängig voneinander bewegbar sind, um eine erste Anordnung, in der die Zugangsöffnung geschlossen ist, eine zweite Anordnung, in der die Platten (44, 46) wenigstens teilweise überlappen, um Zugang zu dem zwischen der Basis (4) und dem weiteren Boden (6) definierten Lagerbereich (2) zu ermöglichen, und eine dritte Anordnung, in der die Platten (44, 46) wenigstens teilweise überlappen, um Zugang zu dem zwischen dem weiteren Boden (6) und der Decke (14) definierten Lagerbereich (2) zu ermöglichen, zu erreichen.

2. Warenlagerbereich (2) nach einem der vorhergehenden Ansprüche, **dadurch gekennzeichnet, dass** die Platten (44, 46) von Hand bewegbar sind.

3. Warenlagerbereich (2) nach einem der Ansprüche 1 bis 2, **dadurch gekennzeichnet, dass** die Bewegung der Platten (44, 46) durch Betreiben eines Antriebsmittels erreicht wird.

4. Warenlagerbereich (2) nach einem der vorhergehenden Ansprüche, **dadurch gekennzeichnet, dass** die Platten (44, 46) an jeweiligen Führungsmitteln (62, 64) entlang bewegbar sind, die an einander gegenüberliegenden Rändern derselben bereitgestellt sind.

5. Warenlagerbereich (2) nach einem der vorhergehenden Ansprüche, **dadurch gekennzeichnet, dass** die Platten (44, 46) an Rollen (52) montiert sind, um zu ermöglichen, dass dieselben bewegt werden.

6. Warenlagerbereich (2) nach einem der vorhergehenden Ansprüche, **dadurch gekennzeichnet, dass** Arretierungsmittel (78) vorgesehen sind, um wenigstens eine der Platten (44, 46) in jeder Anordnung in Sollstellung zu halten.

7. Warenlagerbereich (2) nach einem der vorhergehenden Ansprüche, **dadurch gekennzeichnet, dass** die genannten Platten (44, 46) in Bezug auf eine vertikale Ebene versetzt sind, um zu ermöglichen, dass dieselben auf überlappende Stellungen bewegt werden.

8. Warenlagerbereich (2) nach einem der vorhergehenden Ansprüche, **dadurch gekennzeichnet, dass** der genannte Speicherbereich einen Teil (28, 36), der an dem weiteren Boden (6) montiert ist, und/oder einen Teil (34), der an der Decke (14) montiert ist, aufweist und jeder Teil, der bereitgestellt ist, zwischen einer ersten Stellung, in der derselbe im Wesentlichen mit dem Rest der Decke bzw. des weiteren Bodens fluchtet, und einer zweiten Stellung, in der der Teil wenigstens teilweise angehoben ist, bewegbar ist.

9. Warenlagerbereich (2) nach Anspruch 8, **dadurch gekennzeichnet, dass** der genannte Teil (36) zwischen der ersten und der zweiten Stellung um eine Drehachse schwenkbewegbar ist, die sich über die Breite des Warenlagerbereichs erstreckt.

10. Warenlagerbereich nach Anspruch 9, **dadurch gekennzeichnet, dass** der Teil (36) an oder neben der Zugangsöffnung (12) liegt, wobei ein freies Ende an der Zugangsöffnung liegt und der Teil sich einwärts des Lagerbereichs zur Drehachse (40) erstreckt.

11. Warenlagerbereich (2) nach Anspruch 10, **dadurch gekennzeichnet, dass** das freie Ende der höchste Punkt des Teils (36) ist, wenn derselbe in der zweiten Stellung ist.

12. Warenlagerbereich (2) nach Anspruch 8, **dadurch gekennzeichnet, dass** die genannten Teile (28, 36, 34) von Hand bewegbar sind und mit Arretierungsmitteln versehen sind, um zu ermöglichen, dass dieselben in der zweiten Stellung gehalten werden, bis sie ausgelöst werden.

13. Warenlagerbereich (2) nach einem der vorhergehenden Ansprüche, **dadurch gekennzeichnet, dass** der genannte weitere Boden (6) mit wenigstens einem Abschnitt (20, 28) versehen ist, der an einem vorbestimmten Weg entlang bewegbar ist, um die Beabstandung zwischen diesem Abschnitt und der Basis (4) des Warenlagerbereichs zu verändern.

14. Warenlagerbereich (2) nach Anspruch 13, wenn auch von einem der Ansprüche 8 bis 12 abhängig, **dadurch gekennzeichnet, dass** der Abschnitt (20, 28) zusätzlich zu dem an der Zugangsöffnung bereitgestellten Teil (36) ist.

## Revendications

1. Aire de stockage de marchandises (2), ladite aire de stockage incluant une base (4), un toit (14), des parois latérales (16, 18) et des parois d'extrémité opposées (8, 10), l'une desdites parois d'extrémité incluant une ouverture d'accès (12) dans celle-ci et un plancher supplémentaire (6) est prévu lequel est espacé verticalement de, et localisé entre, la base (4) et le toit (14), et dans laquelle l'ouverture d'accès est munie de moyens de fermeture qui comprennent des premier et deuxième panneaux (44, 46), **caractérisée en ce que** lesdits panneaux sont aptes à être déplacés de manière indépendante de sorte à obtenir une première configuration dans laquelle l'ouverture d'accès est fermée, une deuxième configuration dans laquelle les panneaux (44, 46) se chevauchent au moins partiellement afin de permettre l'accès à l'aire de stockage (2) définie entre la base (4) et le plancher supplémentaire (6), et une troisième configuration dans laquelle les panneaux (44, 46) se chevauchent au moins partiellement afin de permettre l'accès à l'aire de stockage (2) définie entre le plancher supplémentaire (6) et le toit (14).

2. Aire de stockage de marchandises (2) selon l'une quelconque des revendications précédentes **caractérisée en ce que** les panneaux (44, 46) sont aptes à être déplacés manuellement.

3. Aire de stockage de marchandises (2) selon l'une quelconque des revendications 1-2 **caractérisée en ce que** le mouvement des panneaux (44, 46) est obtenu grâce au fonctionnement d'un moyen d'entraînement.

4. Aire de stockage de marchandises (2) selon l'une quelconque des revendications précédentes **caractérisée en ce que** les panneaux (44, 46) sont aptes à être déplacés le long de moyens de guidage respectifs (62, 64) prévus au niveau de bords opposés de ceux-ci.

5. Aire de stockage de marchandises (2) selon l'une quelconque des revendications précédentes **caractérisée en ce que** les panneaux (44, 46) sont montés sur des poulies (52) dans le but de permettre à ceux-ci d'être déplacés.

6. Aire de stockage de marchandises (2) selon l'une quelconque des revendications précédentes **caractérisée en ce que** des moyens de verrouillage (78) sont prévus dans le but de retenir au moins l'un des panneaux (44, 46) en position dans chaque configuration.

7. Aire de stockage de marchandises (2) selon l'une quelconque des revendications précédentes **caractérisée en ce que** lesdits panneaux (44, 46) sont décalés par rapport à un plan vertical de sorte à permettre à ceux-ci d'être déplacés jusqu'à des positions de chevauchement.

8. Aire de stockage de marchandises (2) selon l'une quelconque des revendications précédentes **caractérisée en ce que** ladite aire de stockage inclut une portion (28, 36) qui est montée sur le plancher supplémentaire (6) et/ou une portion (34) qui est montée sur le toit (14) et chaque portion qui est prévue est apte à être déplacée entre une première position dans laquelle celle-ci est substantiellement alignée avec le reste du toit, ou du plancher supplémentaire, respectivement et une deuxième position dans laquelle au moins une partie de la portion est surélevée.

9. Aire de stockage de marchandises (2) selon la revendication 8 **caractérisée en ce que** ladite portion (36) est apte à être déplacée par pivotement entre les première et deuxième positions autour d'un axe-pivot qui s'étend en travers de la largeur de l'aire de stockage de marchandises.

10. Aire de stockage de marchandises selon la revendication 9 **caractérisée en ce que** la portion (36) est localisée au niveau de, ou est adjacente à, l'ouverture d'accès (12), avec une extrémité libre localisée au niveau de l'ouverture d'accès et la portion s'étend vers l'intérieur de l'aire de stockage vers l'axe-pivot (40).

11. Aire de stockage de marchandises (2) selon la revendication 10 **caractérisée en ce que** l'extrémité libre est le point le plus élevé de la portion (36) lorsque celle-ci se trouve dans la deuxième position.

12. Aire de stockage de marchandises (2) selon la revendication 8 **caractérisée en ce que** lesdites portions (28, 36, 34) sont aptes à être déplacées manuellement et sont munies de moyens de verrouillage afin de permettre à celles-ci d'être maintenues dans la deuxième position jusqu'à leur libération.

13. Aire de stockage de marchandises (2) selon l'une quelconque des revendications précédentes **caractérisée en ce que** ledit plancher supplémentaire (6) est muni d'au moins une section (20, 28) qui apte à être déplacée le long d'un trajet pré-désigné de sorte à varier l'espacement entre cette section et la base (4) de l'aire de stockage de marchandises.

14. Aire de stockage de marchandises (2) selon la revendication 13 lorsqu'elle est également dépendante de l'une quelconque des revendications 8-12 **caractérisée en ce que** la section (20, 28) est en sus de la portion (36) prévue au niveau de l'ouverture d'accès.
